# EUROPEAN PATENT SPECIFICATION

(11) **EP 1 367 012 B1**
(45) Date of publication and mention of the grant of the patent: **22.08.2007**
(21) Application number: 03425338.5
(22) Date of filing: 26.05.2003
(51) Int. Cl.: B65G 47/252, B65B 35/24

(54) **A device for righting packs of items**
Vorrichtung zum Aufrichten von Packen von Gegenständen
Dispositif pour redresser des paquets d'articles

(30) Priority: 27.05.2002 IT BO20020324
(43) Date of publication of application: 03.12.2003
(73) Proprietor: Tissue Machinery Company S.p.A., 40057 Granarolo Emilia (Bologna) (IT)
(72) Inventor: Govoni, Luca, 40055 Castenaso (Bologna) (IT)
(74) Representative: Pederzini, Paolo

(56) References cited:
- DE-A1- 4 314 644
- FR-A- 2 593 139

## Description

The present invention relates to a device for righting packs of items according to the preamble of claim 1.

In the sector for packaging various types of items, the need is known for righting packs in order to group them in bundles for insertion in special containers, or for wrapping with suitable wrappers (e.g.: bags). The above-mentioned packs, for example having the shape of cylindrical rolls, are fed out of the production line lying on a horizontal axis aligned with the direction of feed of the line.

For this purpose devices are currently known which automatically cause the angular rotation of the packs fed out of the production line, normally in two or more rows side by side, so that the packs are positioned with the axis vertical at the infeed of the bundle grouping zone.

Such righting devices as in the patent document DE-A-4314644 have, in particular, a set of blade parts carried, at a regular distance from one another, by a conveyor driven with a stepping motion in a direction concordant with the pack outfeed line. The packs are fed by a conveyor belt. The blade parts consist of a square bracket-shaped element and during the set down step from the conveyor to the righting device they have a base section positioned in a plane at a tangent to the conveyor and a side section perpendicular to the conveyor.

Following the transfer of a set of packs onto the blade part positioned in the receiving station, a friction presser stop part stops the next set of packs arriving along the line, to release the first set of packs from the next so that it can then be righted.

The set of packs to be righted, supported by the blade part paused in the receiving station, is gripped at the front between the base section of the blade part and the next set of packs in arrival, stopped by friction by the stop part presser.

In this condition it is normally very difficult to achieve angular rotation of the blade part, necessary in order to right the packs. The axial thrust exerted on the packs is discharged onto the base section of the blade part, which is therefore subject to a great stress, and tends to have a braking effect on the rotation of the blade part. This leads to the need for suitable sizing and greater risks of breakage or irregular operation.

Obviously, this disadvantage is more noticeable the greater the size of the packs to be righted, with a corresponding increase in the stress to which the parts designed to right the packs are subjected.

The aim of the present invention is to overcome the above-mentioned disadvantage by providing a device which allows packs of items to be righted without stresses on the packs themselves or on the parts designed to right them.

Another aim of the invention is to provide a righting device which allows an increase in the line operating speed and productivity.

Yet another aim of the invention is to provide a righting device with a simple design with reliable and versatile operation.

The above-mentioned aims are achieved by the features of the independent claim 1, while preferred features are defined in the dependent claims.

The features of the invention will now be described with reference to the accompanying drawings, in which:
- Figure 1 is a side view of the device for righting packs of items disclosed;
- Figure 2 is a corresponding top view, in the plane II - II illustrated in Figure 1;
- Figures 3 and 4 illustrate, in the above-mentioned side view, successive operating steps of the device disclosed.

With reference to the accompanying drawings, the numeral 1 denotes the device which rights the packs 2 of items.

The packs 2 to be righted are fed, in a set of parallel rows, from a conveyor line 3 basically consisting of a conveyor belt driven with continuous motion. The packs 2 move forward, in the direction indicated by the arrow A, lying on a horizontal axis, aligned with the conveyor belt 3 direction of feed. During transportation on the conveyor belt 3, the packs 2 in each row have their respective front ends in contact with other packs.

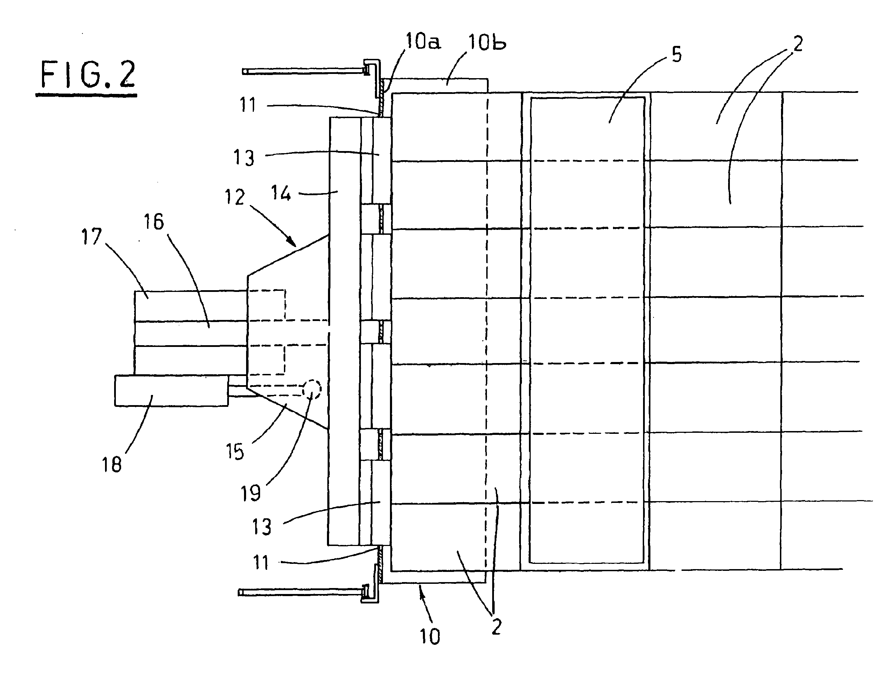

At the outfeed of the conveyor belt 3 there is a stop part 4 basically consisting of a presser 5 which, driven vertically by a special actuator part 6, for example a jack, is designed to stop the packs 2 against a lower surface 7. Obviously, the presser 5 operates simultaneously on a set of packs 2 positioned side by side transversally to the line, as illustrated in Figure 2.

It should be noticed that the contact surface 7 is at a level slightly lower than the pack 2 feed surface formed by the upper active branch of the conveyor belt 3, to prevent jamming during the transfer of the above-mentioned packs 2 onto the surface 7.

The righting device 1 has a set of blade parts 10 carried, at a regular distance from one another, by a chain conveyor 8 driven with a stepping motion in a direction longitudinal to the line 3. The blade parts 10 are connected to the chain conveyor 8 by special fasteners 9.

The blade parts 10 consist, in the known way, of a square bracket-shaped element with a base section 10a positioned in a plane at a tangent to the chain conveyor 8 and a side section 10b perpendicular to the conveyor 8. In a receiving station R, substantially located at one end of the chain conveyor 8, the side section 10b is positioned horizontally, longitudinally aligned with the line 3. It should be noticed that in such a condition the section 10b is positioned at a level slightly lower than the contact surface 7, again to prevent jamming.

The dimensions of the blade parts 10 are such that each receives a set of packs 2 side by side, fed simultaneously by the conveyor belt 3. At the above-mentioned end of the chain conveyor 8, the device 1 has a mobile contact part 12 designed to be driven, with alternating motion, in a direction longitudinal to the line.

The mobile contact part 12 consists of a plurality of pads 13 carried, in such a way that they are aligned with one another, by a bar 14 transversal to the line. The bar 14 is connected, by a support 15, to a slide 16 which slides within a longitudinal guide 17. The contact part 12 is driven by an actuator part 18, for example a jack with a rod jointed to the bar 14 support 15 by a suitable joint part 19.

The pads 13 carried by the bar 14 are designed to engage with corresponding slots 11 in the base section 10a at a tangent to the blade parts 10 conveyor 8, when the blade parts 10 are in the receiving station R. More specifically, the pads 13 move between a retracted disconnected position H and a forward operating position K in which the pads project through the slots 11 in the blade parts 10.

Operation of the device described involves the transfer of a set of packs 2, positioned side by side, onto the blade part 10 paused in the receiving station R.

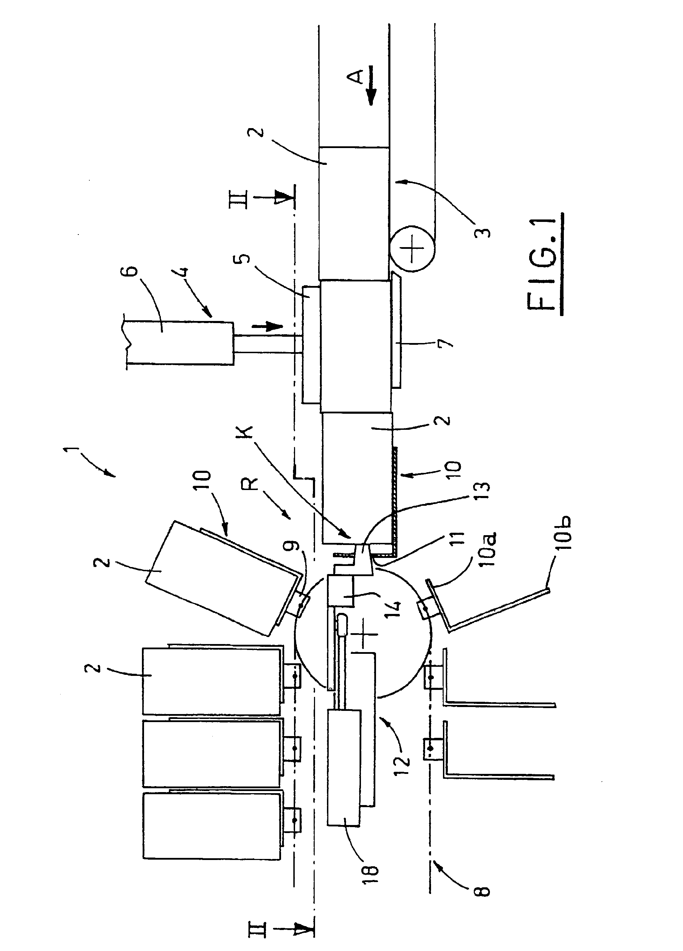

During this step, the mobile contact part 12 pads 13 are arranged in the forward operating position K, that is to say, projecting through the slots 11 in the blade part 10 (Figures 1 and 2).

The set of packs 2 to be righted is therefore brought into contact against the pads 13, as illustrated in Figures 1 and 2.

Suitably synchronised with the transfer of the set of packs 2 onto the blade part 10, the stop part 4 presser 5 which stops the next set of packs 2 arriving along the conveyor belt 3 line against the surface 7 is activated.

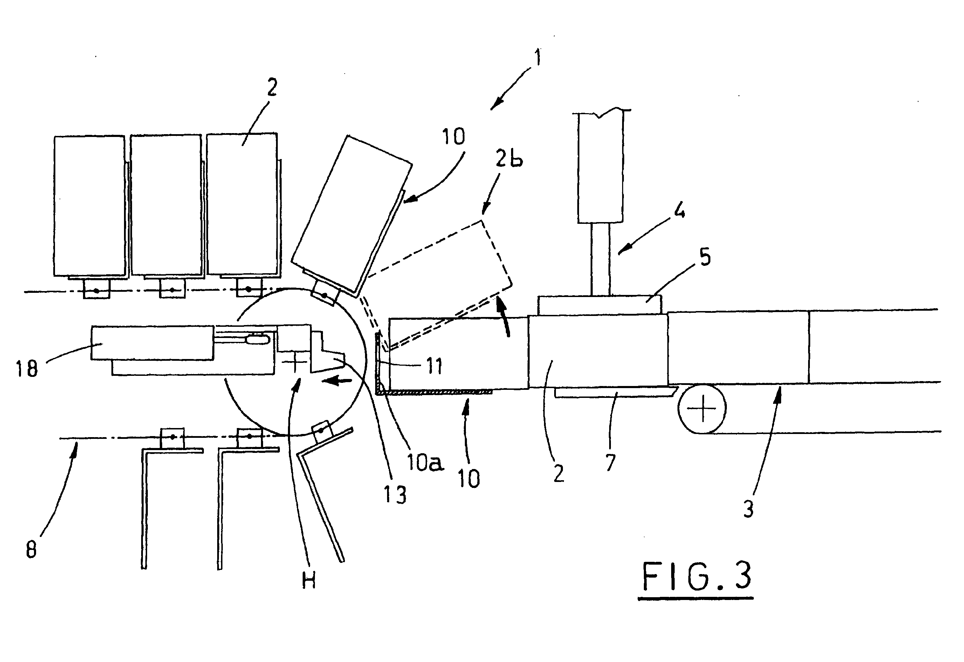

A command is then issued to move the mobile contact part 12 pads 13 to the retracted position H disconnected from the blade part 10 paused in the receiving station R (Figure 3).

This allows angular rotation of the blade part 10, as indicated by the dashed line 2b, after conveyor 8 stepping forward motion. This rotation rights the packs 2 in the known way.

It is important to emphasise that during this stepping rotation, the packs 2 to be righted are completely free of pressure, since they have been disconnected from the next set of packs 2 by retraction of the contact pads 13.

This allows the angular righting rotation to be applied without stresses either on the packs 2 or the parts designed to right them.

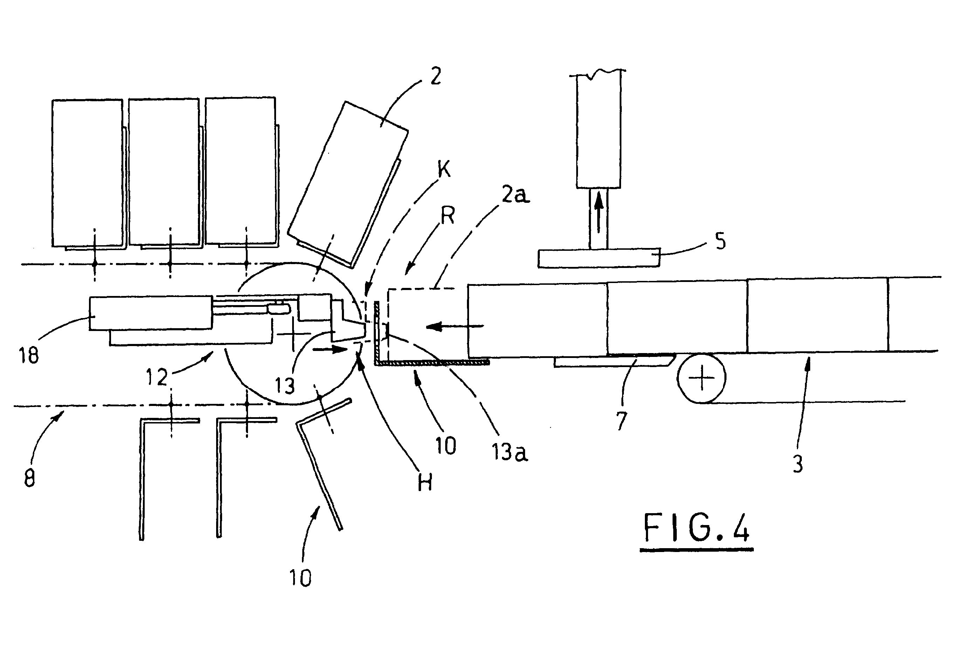

Following this rotation, in the receiving station (Figure 4) there is a blade ready to receive packs and, suitably synchronised, a command is issued to move the mobile contact part 12 pads 13 to the forward operating position, to act as a contact surface for the packs 2 in arrival, as indicated by the dashed lines 2a and 13a.

A command is then issued to lift the stop part 4 presser 5 so as to release the next set of packs 2 to be righted and allow it to be fed onto the blade part 10.

The righting cycle then continues for said next set of packs 2 as described above.

The device disclosed therefore achieves the aim of righting packs of items without stresses either on the packs or on the parts designed to right them.

Righting the packs without stresses either on the packs 2 or on the parts designed to right them allows an increase in the line operating speed and, as a result, its productivity.

Another advantage of the device disclosed is that it has a very simple structure, with advantages in terms of system operation and costs.

It will be understood that the above description of the invention is supplied by way of example and in a non-restricting way, therefore any alternative embodiments do not depart from the scope of the inventive concept, as described above and in the claims herein.

## Claims

1. A device for righting packs of items, of the type comprising a set of blade parts (10) carried, at a regular distance from one another, by conveyor means (8) driven with a stepping motion in a direction longitudinal to the feed line (3) of the packs (2) to be righted, the blade parts being designed to receive a set of packs (2) positioned side by side with a horizontal longitudinal axis, at a receiving station (R), and to cause the angular rotation of the packs (2) into the vertical position, and a stop part (4) with presser means (5) designed to stop a subsequent set of packs (2) arriving along the line (3), the righting device being **characterised in that** it comprises a mobile contact part (12) designed to be driven, with alternating motion, in a direction longitudinal to the line (3) at the receiving station (R); actuator means (18) designed to drive the alternating motion of the mobile contact part (12) between a forward operating position (K) in which the contact part (12) projects from the blade parts (10), acting as a front contact surface for the set of packs (2) to be righted, and a retracted disconnected position (H) which allows the angular rotation of the blade parts (10).

2. The device according to claim 1, **characterised in that** the mobile contact part (12) consists of a plurality of pads (13) carried, in such a way that they are aligned with one another, by a bar (14) transversal to the line (3), the bar guided in such a way that it slides in a direction longitudinal to the line (3) and driven with alternating motion by the actuator means (18).

3. The device according to claim 2, **characterised in that** the mobile contact part (12) pads (13) are designed to engage with corresponding slots (11) in the blade parts (10), in the forward operating position (K) in which the contact part (12) projects from the blade parts (10).

4. The device according to claim 3, **characterised in that** the slots (11) are made in a base section (10a) of the blade parts (10), at a tangent to the conveyor means (8) .

5. The device according to claims 2 and 3, **characterised in that** the mobile contact part (12) pads (13) are located in the forward operating position, projecting through the slots (11) in the blade part (10) in the receiving station (R), during the step of transferring the set of packs (2) to be righted onto the blade part (10).

6. The device according to claim 1, **characterised in that** the presser means (5) are designed to stop the next set of packs (2) against a lower surface (7) during transfer of the set of packs (2) to be righted onto the blade part (10) present in the receiving station (R), in contact with the mobile contact part (12) located in the forward operating position.

## Patentansprüche

1. Vorrichtung zum Aufrichten von Packen von Gegenständen vom Typ enthaltend einen Satz von Schaufelelementen (10), getragen mit einem regelmässigen Abstand voneinander von Fördermitteln (8), die mit einer schrittweisen Bewegung in einer Richtung längs zu der Zuführbahn (3) der aufzurichtenden Packen (2) angetrieben sind, wobei die Schaufelelemente dazu bestimmt sind, eine Gruppe von Seite an Seite mit einer horizontalen Längsachse positionierten Packen (2) an einer Aufnahmestation (R) aufzunehmen und die Winkelumdrehung der Packen (2) in die vertikale Position zu bewirken, sowie ein Anschlagelement (4) mit Pressmitteln (5), dazu bestimmt, eine entlang der Bahn (3) ankommende anschliessende Gruppe von Packen (2) anzuhalten, wobei die Aufrichtvorrichtung **dadurch gekennzeichnet ist, dass** sie ein bewegliches Kontaktelement (12) enthält, dazu vorgesehen, mit wechselweiser Bewegung in einer Richtung längs zu der Bahn (3) an der Übemahmestation (R) angetrieben zu werden; Antriebsmittel (18) zum Antreiben der wechselweisen Bewegung des Kontaktelementes (12) zwischen einer vorgeschobenen Betriebposition (K), in welcher das Kontaktelement (12) von den Schaufelelementen (10) hervorsteht, wobei es als vordere Kontaktfläche für die Gruppe von aufzurichtenden Packen (2) wirkt, und einer zurückgezogenen Position (H), welche die Winkelumdrehung der Schaufelelemente (10) erlaubt.

2. Vorrichtung nach Patentanspruch 1, **dadurch gekennzeichnet, dass** das bewegliche Kontaktelement (12) aus einer Anzahl von Tampons (13) besteht, getragen von einer Stange (14) quer zu der Bahn (3) auf solche Weise, dass sie zueinander ausgerichtet sind, welche Stange auf solche Weise geführt wird, dass sie in einer Richtung längs zu der Bahn (3) gleitet und mit einer wechselweisen Bewegung durch die Antriebsmittel (18) angetrieben wird.

3. Vorrichtung nach Patentanspruch 2, **dadurch gekennzeichnet, dass** die Tampons (13) des beweglichen Kontaktelementes (12) dazu bestimmt sind, sich durch entsprechende Schlitze (11) in den Schaufelelementen (10) zu schieben, und zwar in der vorgeschobenen Betriebsposition (K), in welcher das Kontaktelement (12) von den Schaufelelementen (10) hervorsteht.

4. Vorrichtung nach Patentanspruch 3, **dadurch gekennzeichnet, dass** die Schlitze (11) in einen Basisabschnitt (10a) der Schaufelelemente (10) eingearbeitet sind, und zwar tangential zu den Fördermitteln (8).

5. Vorrichtung nach den Patentansprüchen 2 und 3, **dadurch gekennzeichnet, dass** die Tampons (13) des beweglichen Kontaktelementes (12) in der vorgeschobenen Betriebsposition durch die Schlitze (11) in dem Schaufelelement (10) in der Aufnahmestation (R) hervorstehend angeordnet sind, und zwar während der Phase des Transferierens der Gruppe von aufzurichtenden Packen (2) auf das Schaufelelement (10).

6. Vorrichtung nach Patentanspruch 1, **dadurch gekennzeichnet, dass** die Pressmittel (5) dazu bestimmt sind, die nächste Gruppe von Packen (2) während des Transferierens der Gruppe von aufzurichtenden Packen (2) auf das Schaufelelement (10) in der Aufnahmestation (R) gegen eine untere Oberfläche (7) gedrückt zu halten, und zwar im Anschlag mit dem in der vorgeschobenen Betriebsposition angeordneten Kontaktelement (12).

## Revendications

1. Un dispositif pour redresser des paquets d'articles, du type comprenant une série d'organes à pale (10) supportés, à une distance régulière les uns des autres, par des moyens de transport (8) mus selon un mouvement pas à pas dans une direction longitudinale à la ligne (3) d'alimentation des paquets (2) à redresser, les organes à pale étant destinés à recevoir une série de paquets (2), situés les uns à côté des autres et avec un axe longitudinal horizontal, au niveau d'une station de réception (R), et à faire tourner angulairement lesdits paquets (2) dans la position verticale, ainsi qu'un organe d'arrêt (4) pourvu de moyens presseurs (5) destinés à bloquer une série suivante de paquets (2) arrivant le long de la ligne (3), le dispositif de redressement étant **caractérisé en ce qu'**il comprend un organe mobile de contact (12) destiné à être actionné, selon un mouvement alternatif, dans une direction longitudinale à la ligne (3) au niveau de la station de réception (R) ; des moyens actionneurs (18) destinés à imprimer à l'organe mobile de contact (12) ledit mouvement alternatif entre une position sortie opérationnelle (K), dans laquelle l'organe de contact (12) dépasse des organes à pale (10) et sert de surface frontale de contact pour la série de paquets (2) à redresser, et une position rentrée dégagée (H) qui permet la rotation angulaire des organes à pale (10).

2. Le dispositif selon la revendication 1, **caractérisé en ce que** l'organe mobile de contact (12) consiste en une pluralité de tampons (13) supportés, de manière à être alignés entre eux, par une barre (14) transversale à la ligne (3), telle barre étant guidée de manière à coulisser dans une direction longitudinale à la ligne (3) et étant mue selon un mouvement alternatif par les moyens actionneurs (18).

3. Le dispositif selon la revendication 2, **caractérisé en ce que** les tampons (13) de l'organe mobile de contact (12) sont destinés à venir en prise avec des fentes (11) correspondantes prévues dans les organes à pale (10), dans la position sortie opérationnelle (K) dans laquelle ledit organe de contact (12) dépasse des organes à pale (10).

4. Le dispositif selon la revendication 3, **caractérisé en ce que** les fentes (11) sont réalisées dans une section de base (10a) des organes à pale (10), tangentielle aux moyens de transport (8).

5. Le dispositif selon les revendications 2 et 3, **caractérisé en ce que** les tampons (13) de l'organe mobile de contact (12) sont dans la position sortie opérationnelle, dépassant à travers les fentes (11) de l'organe à pale (10) se trouvant dans la station de réception (R), pendant la phase de transfert de la série de paquets (2) à redresser sur l'organe à pale (10) lui-même.

6. Le dispositif selon la revendication 1, **caractérisé en ce que** les moyens presseurs (5) sont destinés à bloquer la série suivante de paquets (2) contre un plan inférieur (7) pendant le transfert de la série de paquets (2) à redresser sur l'organe à pale (10) présent dans la station de réception (R), en contact avec l'organe mobile de contact (12) situé dans la position sortie opérationnelle.
